# EUROPEAN PATENT SPECIFICATION

(11) **EP 3 569 374 B1**
(45) Date of publication and mention of the grant of the patent: **11.10.2023**
(21) Application number: 17891964.3
(22) Date of filing: 12.04.2017
(51) Int. Cl.: B27K 3/34, B27D 1/04, B27K 5/00, B27K 3/52, C08L 67/03, C08G 63/82, B27K 3/15, B27N 3/28, C08L 97/02

(54) **SYNTHETIC WOOD**
SYNTHETISCHES HOLZ
BOIS SYNTHÉTIQUE

(30) Priority: 13.01.2017 KR 20170006313
(43) Date of publication of application: 20.11.2019
(73) Proprietor: SK Chemicals Co., Ltd., Gyeonggi-do 13494 (KR)
(72) Inventor: SEO, Yong-seok, Seoul 04734 (KR); KIM, Tae-Young, Suwon-si Gyeonggi-do 16425 (KR); YOON, Won-Jae, Seoul 06276 (KR); CHOI, In-hui, Seongnam-si Gyeonggi-do 13355 (KR)
(74) Representative: Modiano, Gabriella Diana
(86) International application number: PCT/KR2017/003968
(87) International publication number: WO 2018/131753

(56) References cited:
- EP-A1- 2 857 431
- JP-A- H10 166 355
- JP-A- 2011 104 948
- JP-B2- 4 267 139
- JP-B2- 4 417 599
- KR-A- 20130 126 063
- KR-A- 20160 051 042
- KR-B1- 100 983 970
- US-A- 3 932 319
- US-A1- 2003 212 244
- US-A1- 2013 095 271
- US-A1- 2016 311 156

## Description

### BACKGROUND OF THE INVENTION

### (a) Field of the Invention

The present invention relates to a synthetic wood, and a preparation method thereof. More particularly, the present invention relates to a synthetic wood having excellent flexural property and impact strength, and a preparation method thereof.

### (b) Description of the Related Art

Recently, woods are used for building materials, such as floorboards, doors, door frames, window frames, window sill, fences, and decks, for reasons of consumer's preference for natural timbers and improvement of aesthetics by natural textures.

However, use of natural wood in the interior and exterior materials of buildings has problems of deforestation due to logging of timber and vulnerability to fire. In particular, due to intrinsic properties of natural wood, water resistance, heat resistance, impact resistance, bending strength, dimensional stability, and weather resistance are deteriorated, and therefore, it is difficult to use natural wood as interior or exterior materials of buildings.

In order to address the above problems, synthetic wood with a texture and appearance similar to natural wood has been widely used as interior and exterior materials of buildings. Synthetic wood is made by extrusion processing of a synthetic wood composition which is obtained by mixing wood flour of waste wood, wood remnants, useless miscellaneous wood, etc. with a resin such as polyvinyl chloride (PVC). Such synthetic wood has improved physical properties of water resistance, heat resistance, impact resistance, bending strength, dimensional stability, and weather resistance, as compared with natural wood. Further, since synthetic wood includes inexpensive wood flour, its production costs are low. However, in the PVC resin used together with wood flour, a phthalate-based plasticizer and a stabilizer containing heavy metals, etc. are used in order to enhance processability, which have brought about environmental concerns. The plasticizer contained in PVC is not bound to the PVC body but exists in a floating state, and therefore, it easily leaches even by a small impact. The plasticizers may cause cancer in the liver or kidneys and may have adverse effects on other organs, and therefore, the advanced countries such as Europe, the United States, etc. take safety measures such as banning of the sale of PVC toys for children or retrieval of products. In addition, heavy metal ions contained in cadmium stearate (Cd-St) or lead stearate (Pb-St) used as a thermal stabilizer may cause heavy metal poisoning when come in contact with human body and may be main causes of sick building syndrome, etc.

Further, when installed outside and exposed to sunlight, PVC synthetic wood may have weather resistance problems such as thermal deformation, discoloration, photodegradation of the resin, etc. Attempts have been made to overcome the drawbacks of PVC synthetic wood.

Korean Patent No. 10-0983970 and Korean Patent No. 10-1073774 have proposed replacing PVC synthetic wood with a polyolefin-based resin as an alternative environment-friendly material. However, the polyolefin-based resin has a high coefficient of linear thermal expansion to have a problem of dimensional deformation, etc. In synthetic wood, wood is a polar hydrophilic material, whereas the polyolefin-based resin such as polypropylene (PP) and polyethylene (PE) is a non-polar hydrophobic material. Therefore, since wood and the polyolefin resin are not compatible with each other, a compatibilizer is added, which may cause disadvantages of high material costs and low tensile strength, compressive strength, flexural strength, and impact strength at the time of processing, such that the synthetic wood may be easily broken. Accordingly, there is a continuous demand for a new eco-friendly construction material, especially, an environmentally friendly high-strength synthetic wood capable of improving the problems of the PVC resin and the polyolefin-based resin, and a preparation method thereof. US 2016/311156 discloses a composite material comprising medium density fiberboards or oriented strand boards and a polyester resin including terephthalic acid and 1,4 cyclohexanedimethanol moieties. JP 4267139 and JP 4417599 disclose a wood composite comprising wood flour and a polyester resin.

### SUMMARY OF THE INVENTION

A synthetic wood of the present invention and a preparation method thereof according to the subject-matter of claims 1 and 9 aim to achieve excellent flexural property and impact strength by including a polyester resin having high compatibility with wood flour.

In the present specification, provided is a synthetic wood including a polyester resin (A) and wood flour (B), wherein the polyester resin (A) is a first polyester resin including moieties of dicarboxylic acid components including terephthalic acid; and moieties of diol components including cyclohexanedimethanol, or a second polyester resin including moieties of dicarboxylic acid components including terephthalic acid; and moieties of diol components including 10 to 80 mole% of cyclohexanedimethanol, 5 to 60 mole% of isosorbide, and a residual amount of other diol compounds.

The first polyester resin may have a glass transition temperature (Tg) of 75°C to 85°C.

The second polyester resin may have a glass transition temperature (Tg) of 85°C to 130°C.

The polyester resin (A) may be the second polyester resin including moieties of dicarboxylic acid components including terephthalic acid; and moieties of diol components including 10 to 80 mole% of cyclohexanedimethanol, 5 to 12 mole% of isosorbide, and a residual amount of other diol compounds.

The polyester resin (A) may have an intrinsic viscosity of 0.5 dl/g to 1.0 dl/g.

The polyester resin (A) may be included in an amount of 30 parts by weight to 80 parts by weight with respect to 100 parts by weight of the wood flour (B).

The polyester resin (A) may be included in an amount of 50 parts by weight to 70 parts by weight with respect to 100 parts by weight of the wood flour (B).

The wood flour (B) may have an average particle size of 50 mesh to 200 mesh.

The wood flour (B) may have a water content of 0.01% to 3%.

The synthetic wood may have a flexural load of 4,000 N to 10,000 N, as measured according to KS M ISO 178.

The synthetic wood may have impact resistance of 3.3 kJ/m² to 7.0 kJ/m², as measured according to KS M ISO 179-1.

Further, in the present specification, provided is a method of preparing the synthetic wood, the method including the steps of mixing the polyester resin (A) and the wood flour (B) and extruding a mixture at a temperature of 150°C to 250°C, wherein the polyester resin (A) is a first polyester resin including moieties of dicarboxylic acid components including terephthalic acid; and moieties of diol components including cyclohexanedimethanol, or a second polyester resin including moieties of dicarboxylic acid components including terephthalic acid; and moieties of diol components including 10 to 80 mole% of cyclohexanedimethanol, 5 to 60 mole% of isosorbide, and a residual amount of other diol compounds.

The polyester resin (A) may be mixed in an amount of 30 parts by weight to 80 parts by weight with respect to 100 parts by weight of the wood flour (B).

The first polyester resin may be prepared by the steps of esterifying the diol components including cyclohexanedimethanol with the dicarboxylic acid components including terephthalic acid in the presence of an esterification catalyst including a zinc-based compound; adding a phosphorus-based stabilizer thereto at the time when the degree of esterification reaches 80% or more; and subjecting an esterification reaction product to polycondensation.

The second polyester resin may be prepared by the steps of esterifying the diol components including 5 to 60 mole% of isosorbide, 10 to 80 mole% of cyclohexanedimethanol, and a residual amount of other diol compounds with the dicarboxylic acid components including terephthalic acid in the presence of an esterification catalyst including a zinc-based compound; adding a phosphorus-based stabilizer thereto at the time when the degree of esterification reaches 80% or more; and subjecting an esterification reaction product to polycondensation.

The polyester resin (A) may have an intrinsic viscosity of 0.5 dl/g to 1.0 dl/g.

An amount of the diol components or the dicarboxylic acid components which remain unreacted without participating in the esterification reaction may be less than 20%.

The esterification reaction may be carried out at a pressure of 0 kg/cm² to 10.0 kg/cm² and at a temperature of 150°C to 300°C.

In the esterification reaction, a molar ratio of the dicarboxylic acid components: the diol components may be 1:1.05 to 1: 3.0.

The esterification reactions may be carried out at a pressure of 0 kg/cm² to 10.0 kg/cm² and at a temperature of 150°C to 300°C, respectively.

The esterification reaction may be carried out for 200 minutes to 330 minutes.

The polycondensation reaction may be carried out at a temperature of 150°C to 300°C and a reduced pressure of 600 mmHg to 0.01 mmHg for 1 hour to 24 hours.

The method may further include the step of adding one or more catalyst compounds selected from the group consisting of titanium-based compounds, germanium-based compounds, antimony-based compounds, aluminum-based compounds, and tin-based compounds to the polycondensation reaction.

According to the synthetic wood of the present invention, the specific polyester resin is used to improve interfacial adhesion between the wood flour and the resin, thereby remarkably improving mechanical properties of the synthetic wood, in particular, flexural property and impact strength thereof.

Further, according to the method of preparing the synthetic wood of the present invention, the specific polyester resin and wood flour are mixed, and a resulting mixture is extruded under particular conditions to prepare a synthetic wood having excellent mechanical properties, in particular, flexural property and impact strength.

### DETAILED DESCRIPTION OF THE EMBODIMENTS

The present specification relates to a synthetic wood including a polyester resin (A) and wood flour (B), wherein the polyester resin (A) is a first polyester resin including moieties of dicarboxylic acid components including terephthalic acid; and moieties of diol components including cyclohexanedimethanol, or a second polyester resin including moieties of dicarboxylic acid components including terephthalic acid; and moieties of diol components including 10 to 80 mole% of cyclohexanedimethanol, 5 to 60 mole% of isosorbide, and a residual amount of other diol compounds.

Further, the present specification relates to a method of preparing the synthetic wood, the method including the steps of mixing the polyester resin (A) and the wood flour (B) and extruding a mixture at a temperature of 150°C to 250°C, wherein the polyester resin (A) is a first polyester resin including moieties of dicarboxylic acid components including terephthalic acid; and moieties of diol components including cyclohexanedimethanol, or a second polyester resin including moieties of dicarboxylic acid components including terephthalic acid; and moieties of diol components including 10 to 80 mole% of cyclohexanedimethanol, 5 to 60 mole% of isosorbide, and a residual amount of other diol compounds.

Hereinafter, a synthetic wood and a preparation method thereof according to specific embodiments of the present specification will be described.

In this specification, the terms "the first", "the second", and the like are used to describe a variety of components, and these terms are merely employed to differentiate a certain components from other components.

Further, the terms used in this specification are just for explaining exemplary embodiments and it is not intended to restrict the present invention. The singular expression may include the plural expression unless it is differently expressed contextually. It must be understood that the term "include", "equip", or "have" in this specification is only used for designating the existence of characteristics taken effect, numbers, steps, components, or combinations thereof, and do not exclude the existence or the possibility of addition of one or more different characteristics, numbers, steps, components or combinations thereof beforehand.

### Synthetic wood

Since a polyolefin-based resin generally used in synthetic wood exhibits hydrophobicity, it shows low interfacial adhesion when mixed with hydrophilic wood flour, and therefore, there is a problem in that flexural strength of wood is lowered. Further, in the case of a polyvinyl chloride (PVC) resin, a phthalate-based plasticizer and a stabilizer containing heavy metals, etc. are used together in order to enhance processability during preparation of the synthetic resin, and they easily leach from wood to cause a problem of environmental pollution.

Accordingly, in order to solve the above-described problems, the present inventors have conducted studies on a resin having more improved physical properties and excellent compatibility with wood flour, and they developed a synthetic wood which may be easily processed even without an additional additive, and may have excellent interfacial adhesion with wood flour to show superior flexural property and impact strength, thereby completing the present invention.

A synthetic wood according to an embodiment of the present specification may include a polyester resin (A) and wood flour (B), wherein the polyester resin (A) is a first polyester resin including moieties of dicarboxylic acid components including terephthalic acid; and moieties of diol components including cyclohexanedimethanol, or a second polyester resin including moieties of dicarboxylic acid components including terephthalic acid; and moieties of diol components including 10 to 80 mole% of cyclohexanedimethanol, 5 to 60 mole% of isosorbide, and a residual amount of other diol compounds.

In the present invention, the polyester resin (A) has excellent interaction with wood flour due to a hydrophilic group of a polyester bond of copolyester, and therefore, interfacial adhesion between two components is remarkably improved.

As used herein, the term 'moiety' refers to a certain segment or unit that is included in a product and is derived from a specific compound when the specific compound participates in a chemical reaction to form the product. For example, the 'moiety' of the dicarboxylic acid components and the 'moiety' of the diol components refer to a segment derived from the dicarboxylic acid components and a segment derived from the diol components in the polyester formed by esterification reaction or polycondensation reaction, respectively.

The term `dicarboxylic acid components' is intended to include dicarboxylic acids such as terephthalic acid, etc., alkyl esters thereof (including C1-C4 lower alkyl esters such as monomethyl, monoethyl, dimethyl, diethyl, or dibutyl esters), and/or acid anhydrides thereof. The dicarboxylic acid components may react with the diol components to form dicarboxylic acid moieties such as terephthaloyl moieties.

As the dicarboxylic acid components used in the synthesis of the polyester include the terephthalic acid, physical properties such as heat resistance, chemical resistance, or weather resistance (e.g., prevention of molecular weight reduction or yellowing caused by UV) of the prepared wood may be improved.

The dicarboxylic acid components may further include aromatic dicarboxylic acid components, aliphatic dicarboxylic acid components, or mixtures thereof as other dicarboxylic acid components. The term 'other dicarboxylic acid components' means components obtained by excluding terephthalic acid from the dicarboxylic acid components.

The aromatic dicarboxylic acid components may be C8-C20, preferably C8-C14 aromatic dicarboxylic acids, or mixtures thereof. Specific examples of the aromatic dicarboxylic acid components include isophthalic acid, naphthalenedicarboxylic acids such as 2,6-naphthalenedicarboxylic acid, etc., diphenyl dicarboxylic acid, 4,4'-stilbenedicarboxylic acid, 2,5-furandicarboxylic acid, 2,5-thiophenedicarboxylic acid, etc., but specific examples of the aromatic dicarboxylic acid are not limited thereto.

The aliphatic dicarboxylic acid components may be C4-C20, preferably, C4-C12 aliphatic dicarboxylic acid components, or mixtures thereof. Specific examples of the aliphatic dicarboxylic acids include cyclohexanedicarboxylic acids such as 1,4-cyclohexanedicarboxylic acid, 1,3-cyclohexanedicarboxylic acid, etc., linear, branched, or cyclic aliphatic dicarboxylic acid components such as phthalic acid, sebacic acid, succinic acid, isodecylsuccinic acid, maleic acid, fumaric acid, adipic acid, glutaric acid, azelaic acid, etc., but the specific examples of the aliphatic dicarboxylic acids are not limited thereto.

Meanwhile, the dicarboxylic acid components may include 50 to 100 mole%, preferably, 70 to 100 mole% of terephthalic acid; and 0 to 50 mole%, preferably, 0 to 30 mole% of one or more dicarboxylic acids selected from the group consisting of aromatic dicarboxylic acids and aliphatic dicarboxylic acids. If a content of terephthalic acid in the dicarboxylic acid components is too small or too large, physical properties such as heat resistance, chemical resistance, or weather resistance, etc. of the polyester resin may be deteriorated.

The diol components used in the synthesis of the polyester resin (synthesis of the first polyester resin and the second polyester resin) include cyclohexanedimethanol (CHDM).

The cyclohexanedimethanol may be specifically 1,2-cyclohexanedimethanol, 1,3-cyclohexanedimethanol, or 1,4-cyclohexanedimethanol, and impact strength of the polyester resin may be greatly increased by the cyclohexanedimethanol.

The diol components used in the synthesis of the polyester resin may further include isosorbide (ISB) in addition to cyclohexanedimethanol (CHDM) (synthesis of the second polyester resin), and when the diol components include isosorbide (1,4:3,6-dianhydroglucitol), heat resistance of the synthetic wood may be improved, and physical properties such as chemical resistance, etc. may be improved. In particular, as the diol components include isosorbide, hydrophilicity of the resin may be further improved to further enhance compatibility with wood flour, leading to more improvement of flexural strength of the synthetic wood of the embodiment.

When the diol components further include isosorbide, the diol components may include 10 to 80 mole% of cyclohexanedimethanol, 5 to 60 mole% of isosorbide, and a residual amount of other diol compounds.

The term "other diol components" refers to diol components other than the isosorbide and cyclohexanedimethanol, and may be, for example, aliphatic diols, aromatic diols, or mixtures thereof.

The aromatic diols may include C8-C40, preferably, C8-C33 aromatic diol compounds. Specific examples of the aromatic diol compounds include ethylene oxides such as polyoxyethylene-(2.0)-2,2-bis(4-hydroxyphenyl) propane, polyoxypropylene-(2.0)-2,2-bis(4-hydroxyphenyl)propane, polyoxypropylene-(2.2)-polyoxyethylene-(2.0)-2,2-bis(4-hydroxyphenyl)propane, polyoxyethylene-(2.3)-2,2-bis(4-hydroxyphenyl)propane, polyoxypropylene-(6)-2,2-bis(4-hydroxyphenyl)propane, polyoxypropylene-(2.3)-2,2-bis(4-hydroxyphenyl)propane, polyoxypropylene-(2.4)-2,2-bis(4-hydroxyphenyl)propane, polyoxypropylene-(3.3)-2,2-bis(4-hydroxyphenyl)propane, polyoxyethylene-(3.0)-2,2-bis(4-hydroxyphenyl)propane, polyoxyethylene-(6)-2,2-bis(4-hydroxyphenyl)propane, etc., and/or propylene oxide addition bisphenol A derivatives (polyoxyethylene-(n)-2,2-bis(4-hydroxyphenyl)propane, polyoxypropylene-(n)-2,2-bis(4-hydroxyphenyl)propane or polyoxypropylene-(n)-polyoxyethylene-(n)-2,2-bis(4-hydroxyphenyl)propane, etc., but the specific examples of the aromatic diol compounds are not limited thereto. Here, n means the number of the polyoxyethylene or polyoxypropylene units.

The aliphatic diols may include C2-C20, preferably, C2-C12 aliphatic diol compounds. Specific examples of the aliphatic diol compounds may include linear, branched, or cyclic aliphatic diol components such as ethylene glycol, diethylene glycol, triethylene glycol, propanediols (1,2-propanediol, 1,3-propanediol, etc.), 1,4-butanediol, pentanediols, hexanediols (e.g., 1,6-hexanediol), neopentyl glycol (2,2-dimethyl-1,3-propanediol), 1,2-cyclohexanediol, 1,4-cyclohexanediol, 1,2-cyclohexanedimethanol, 1,3-cyclohexanedimethanol, 1,4-cyclohexanedimethanol, tetramethylcyclobutanediol, etc., but the specific examples of the aliphatic diol compounds are not limited thereto.

As described above, the diol components of the polyester resin may include 5 to 60 mole%, preferably 5 to 45 mole%, and more preferably 5 to 12 mole% of isosorbide. As a content of isosorbide is within the above range, heat resistance or chemical resistance of the resin may be improved. However, if the content of isosorbide exceeds 60 mole%, the appearance properties of the polyester resin or products may be deteriorated, or yellowing may occur.

Meanwhile, the polyester resin may include a zinc-based catalyst and a phosphorus-based stabilizer in the total resin.

The phosphorus-based stabilizer may be used in the course of the synthesis of the polyester resin. Specifically, the polyester resin may include 10 ppm to 300 ppm, preferably, 20 ppm to 200 ppm of the phosphorus-based stabilizer based on a content of a central metal atom in the total amount of the resin. Specific examples of the phosphorus-based stabilizers may include phosphoric acid, trimethyl phosphate, triethyl phosphate, triphenyl phosphate, triethyl phosphonoacetate, etc. These phosphorus-based stabilizers may be used alone or in a mixture of two or more thereof.

The polyester resin may include 1 to 100 ppm of the zinc-based catalyst, based on the content of the central metal atom in the total amount of the resin. Specific examples of such zinc-based catalysts include zinc acetate, zinc acetate dihydrate, zinc chloride, zinc sulfate, zinc sulfide, zinc carbonate, zinc citrate, zinc gluconate, etc. These zinc-based catalysts may be used alone or in a mixture thereof.

Meanwhile, in the polycondensation reaction of the synthesis of the polyester resin, a polycondensation catalyst including a titanium-based compound, a germanium-based compound, an antimony-based compound, an aluminum-based compound, a tin-based compound, or a mixture thereof may be used. The polyester resin may include 1 to 100 ppm of the polycondensation catalyst, based on the content of the central metal atom in the total amount of the polyester resin.

Examples of the titanium-based compound may include tetraethyl titanate, acetyltripropyl titanate, tetrapropyl titanate, tetrabutyl titanate, polybutyl titanate, 2-ethylhexyl titanate, octylene glycol titanate, lactate titanate, triethanolamine titanate, acetyl acetonate titanate, ethyl acetoacetate titanate, isostearoyl titanate, titanium dioxide, a titanium dioxide/silicon dioxide copolymer, a titanium dioxide/zirconium dioxide copolymer, etc.

Examples of the germanium-based compound may include germanium dioxide (GeO₂), germanium tetrachloride (GeCl₄), germanium ethylene glycoxide, germanium acetate, copolymers thereof, mixtures thereof, etc. Preferably, germanium dioxide may be used. Crystalline or amorphous germanium dioxide or glycol soluble germanium dioxide may also be used as the germanium dioxide.

In the course of the synthesis of the polyester resin, an amount of the raw materials which remain unreacted without participating in the reaction is relatively small, and the raw materials exhibit high efficiency and a high degree of polymerization. Thus, the polyester resin may have an intrinsic viscosity of 0.5 dl/g to 1.0 dl/g. As the polyester resin satisfies the above intrinsic viscosity, there is an advantage that the polyester resin is easily mixed with wood flour. In the synthetic wood according to an Example of the present invention, a thermoplastic resin may be used, in addition to the polyester resin having the above-described particular moieties. The thermoplastic resin additionally used together may be included in an appropriate amount within a range that does not deteriorate the effects of improving compatibility of the polyester resin with wood and mechanical properties.

In the synthetic wood according to an Example of the present specification the first polyester resin may have a glass transition temperature of 75°C to 85°C, preferably, 78°C to 82°C. When the first polyester resin has a glass transition temperature within the above range, compatibility with wood flour may be improved, leading to improvement of interfacial adhesion.

In the synthetic wood according to an Example of the present specification the second polyester resin may have a glass transition temperature of 85°C to 130°C, preferably, 85°C to 110°C. When the second polyester resin has a glass transition temperature within the above range, compatibility with wood flour may be improved, leading to improvement of interfacial adhesion.

In the synthetic wood according to an Example of the present specification the polyester resin (A) may be mixed in an amount of 30 to 80 parts by weight, preferably 50 to 70 parts by weight, based on 100 parts by weight of wood flour (B). If the content of the polyester is less than 30 parts by weight, a kneading property of the resin and wood flour may be reduced, and it is difficult to prepare the synthetic wood in an extrudate form. Further, if the content of the polyester is more than 80 parts by weight, the content of wood flour becomes small, and therefore, it is difficult to fully express the texture of natural materials, and it is difficult to meet the physical properties required for window frames, window sill, fences, and decks, for example, bending strength, tensile strength, impact strength, etc.

The synthetic wood according to an Example of the present specification includes the polyester resin (A) having the above-described particular moieties and wood flour (B).

The wood flour is wood flour prepared by pulverizing and drying wood, and waste wood, wood remnants, useless miscellaneous wood, etc. may be used. Specifically, broadleaf trees or needleleaf trees may be used. The broadleaf trees may include Schmidt's birch, Smooth Japanese maple, Sawthooth oak, Chinese magnolia vine, Lacquertree, Daimo oak, Korean ash, Japanese alder, Amur Linden, etc., and the needleleaf trees may include Hinoki cypress, Japanese cedar, Korean Fir, Sawara cypress, Japanese red pine, Korean pine, Needle Fir, etc., but are not limited thereto.

Since the wood flour includes a large amount of water in a natural state, a drying process is preferably performed in order to remove water. Specifically, the wood flour may have a water content of 0.01% to 3%, preferably 0.05% to 1%, as measured after it is dried at 80°C to 150°C. When the wood flour satisfies the water content within the above range, it achieves excellent compatibility when mixed with the above-described polyester resin.

The wood flour having an average particle size of 50 mesh to 200 mesh, preferably, 60 to 140 mesh may be used. Here, the diameter of the wood flour means a diameter after drying. If the particle size of the wood flour is less than 50 mesh, a mixing property may be deteriorated. If the particle size of the wood flour is more than 200 mesh, the particles are too small, and therefore, strength may be deteriorated.

The synthetic wood according to an Example of the present specification may further include an additive for additionally improving performance without departing from the intended effect of the present invention. A kind of the additive may include a UV absorber, an antioxidant, a lubricant, etc., but is not limited thereto.

Specific example of the UV absorber may include 2-(2-hydroxy-5-methylphenyl)benzotriazole, 2-(2-hydroxy-3-tertiary-butyl-5-methylphenyl)-5-chlorobenzotriazole, 2-(2-hydroxy-3,5-ditertiary-butylphenyl)-5-chlorobenzotriazole, etc., and these UV absorbers may be used alone or in a mixture of two or more thereof.

The UV absorber may be used in an amount of 0.01 to 5.0 parts by weight, preferably 0.1 to 1 part by weight with respect to total 100 parts by weight of the synthetic wood. In this case, performance of the UV absorber may be preferably achieved without reduction of physical properties of the synthetic wood.

The antioxidant may include phenol-, phosphorus-, or sulfur ester-based antioxidants, and these antioxidants may be used alone or in a mixture thereof. The antioxidant may be used in an amount of 0.01 to 5.0 parts by weight, preferably 0.1 to 1 part by weight with respect to 100 parts by weight of the polyester resin. In this case, performance of the antioxidant may be preferably achieved without reduction of physical properties of the synthetic wood.

The lubricant may include ethylene bis-stearamide, polyethylene wax, zinc stearate, magnesium stearate, stearic acid, etc., and the lubricant may be used in an amount of 0.01 to 5.0 parts by weight with respect to 100 parts by weight of the polyester resin. In this case, function of the lubricant may be preferably achieved without reduction of physical properties of the synthetic wood.

Since the synthetic wood according to an Example of the present specification includes the above-described polyester-based resin and wood flour, its flexural load according to KS M ISO 178 may satisfy 4,000 N to 10,000 N. Within the above range, the synthetic wood may be suitably used for the interior and exterior materials of buildings.

Since the synthetic wood according to an Example of the present specification includes the above-described polyester-based resin and wood flour, its impact strength according to KS M ISO 179-1 may satisfy 3.3 kJ/m² to 10.0 kJ/m². Within the above range, the synthetic wood may be suitably used for the interior and exterior materials of buildings.

### Preparation method of synthetic wood

Meanwhile, the present specification relates to a method of preparing the synthetic wood.

The method of preparing the synthetic wood according to an Example of the present specification includes the step of mixing the polyester resin(A) and wood flour(B), and extruding a mixture at a temperature of 150°C to 250°C.

In the extruding step, the mixture is extruded at a temperature of 150°C to 250°C, thereby preparing the synthetic wood having excellent mechanical strength without changes in physical properties of the polyester resin and wood flour. When the extruding process is carried out at a temperature of lower than 150°C, compatibility with wood flour may be reduced to deteriorate physical properties, and when the extruding process is carried out at a temperature of higher than 250°C, burning of wood flour or deterioration of the resin itself may occur.

Further, the extruding step may be performed by using profile extrusion and injection equipment, and in this regard, the temperature range mentioned above may mean a set temperature of the extrusion and injection equipment.

The above-described method of preparing the synthetic wood includes the step of extruding the mixture. The components used in the method of preparing the synthetic wood of the present invention and contents thereof may be the same as those of the synthetic wood of the present invention described above.

The polyester resin (A) is a first polyester resin including moieties of dicarboxylic acid components including terephthalic acid; and moieties of diol components including cyclohexanedimethanol, or a second polyester resin including moieties of dicarboxylic acid components including terephthalic acid; and moieties of diol components including 10 to 80 mole% of cyclohexanedimethanol, 5 to 60 mole% of isosorbide, and a residual amount of other diol compounds.

Here, the first polyester resin may be prepared by the following steps. In detail, the first polyester resin may be prepared by the steps of esterifying the diol components including cyclohexanedimethanol with the dicarboxylic acid components including terephthalic acid in the presence of an esterification catalyst including a zinc-based compound; adding a phosphorus-based stabilizer thereto at the time when the degree of esterification reaches 80% or more; and subjecting an esterification reaction product to polycondensation.

Further, the second polyester resin may be prepared by the following steps. In detail, the second polyester resin may be prepared by further including isosorbide in the diol components used in the preparation of the first polyester resin, in addition to cyclohexanedimethanol.

In the step of preparing the polyester resin, the esterification catalyst including the zinc-based compound is used, and the phosphorus-based stabilizer is added to a reaction solution at the end of the esterification reaction, for example, at the time when the degree of esterification reaches 80% or more, and a resulting esterification reaction product is subjected to polycondensation, thereby providing the polyester resin having physical properties, such as high heat resistance, chemical resistance, and impact resistance, and having excellent appearance properties and high air tightness.

The polyester resin provided according to the preparation method may have high viscosity and excellent impact strength, together with high heat resistance, and also have low oxygen permeability and relatively high intrinsic viscosity due to its molecular structural features. As described above, since the polyester resin may have an intrinsic viscosity of 0.5 dl/g to 1.0 dl/g, and may be easily mixed with wood flour, mechanical properties of the synthetic wood to be prepared may be improved.

Meanwhile, use of the zinc-based catalyst and addition of the phosphorus-based stabilizer at a particular time point enables completion of the esterification reaction in a relatively short time, specifically 400 minutes, preferably 200 minutes to 330 minutes, more preferably 230 minutes to 310 minutes with high reaction efficiency. The shortened esterification reaction time shortens the contact time at a high temperature, contributing to an improvement in the color of the polyester resin. The shortened reaction time is also advantageous in terms of energy consumption reduction.

In the method of preparing the polyester resin, the amount of the diol components or dicarboxylic acid components which remain unreacted without participating in the esterification reaction may be less than 20%. This high reaction efficiency appears to be because the zinc-based catalyst is used and the phosphorus-based stabilizer is added at a predetermined time point. Thus, in the step of preparing the polyester resin, since most of the diol components or the dicarboxylic acid components which are raw materials participate in the reaction, the amount of the materials that remain unreacted is relatively small. The polyester resin thus synthesized has the excellent physical properties described above and may be easily applied to commercial products.

Details of the dicarboxylic acid components including terephthalic acid, cyclohexanedimethanol, isosorbide, and other diol compounds are the same as in the description of the synthetic wood of the present invention.

In the esterification reaction, oligomers may be formed by the reaction of the dicarboxylic acid components with the diol components. In the method of preparing the polyester resin, the use of the zinc-based catalyst and the addition of the phosphorus-based stabilizer at a predetermined time point enable the formation of oligomers whose physical properties and molecular weight are optimized, with high efficiency.

The esterification reaction may be carried out by reacting the dicarboxylic acid components and the diol components at a pressure of 0 kg/cm² to 10.0 kg/cm² and a temperature of 150°C to 300°C. The esterification reaction conditions may be appropriately varied depending on specific characteristics of the final polyester, a molar ratio between the dicarboxylic acid components and glycol, or processing conditions. Specifically, preferred conditions for the esterification reaction include a pressure of 0 kg/cm² to 5.0 kg/cm², more preferably 0.1 kg/cm² to 3.0 kg/cm²; and a temperature of 200°C to 270° C, more preferably 240°C to 260°C.

The esterification reaction may be carried out in a batch or continuous manner. The raw materials may be separately added, but addition of a slurry of the diol components and the dicarboxylic acid components is preferred. The slurry may be prepared by dissolving the solid-type diol components including isosorbide in water or ethylene glycol at room temperature, and mixing a solution with the dicarboxylic acid components including terephthalic acid. Alternatively, the slurry may be prepared by melting isosorbide at 60°C or higher, and mixing the molten isosorbide with the dicarboxylic acid components including terephthalic acid and the other diol components. Water may be further added to the slurry of the dicarboxylic acid components and the copolymerized diol components of isosorbide and ethylene glycol, and the addition of water assists in enhancing the flowability of the slurry.

A molar ratio of the dicarboxylic acid components and the diol components participating in the esterification reaction may be 1:1.05 to 1:3.0. If the molar ratio of the dicarboxylic acid components and the diol components is less than 1.05, the dicarboxylic acid components may remain unreacted after polymerization, causing poor transparency of the resin. Meanwhile, if the molar ratio exceeds 3.0, a polymerization rate may be lowered or productivity of the resin may be deteriorated.

Meanwhile, in the step of preparing the polyester resin, the phosphorus-based stabilizer may be added at the end of the esterification reactions, for example, at the time when each of the degrees of esterification reaches 80% or more. The time when the degree of esterification reaches 80% or more means a time when 80% or more of the dicarboxylic acid components are reacted. The degree of esterification may be measured by analyzing a content of terminal carboxylic acid groups of the dicarboxylic acid components.

The phosphorus-based stabilizer may be used in an amount of 10 ppm to 300 ppm, preferably 20 ppm to 200 ppm, based on the weight of the resin to be prepared. Specific examples of such phosphorus-based stabilizers are the same as those described above.

As such, when the phosphorus-based stabilizer is injected at the time when the degree of esterification reaches 80% or more, the amount of unreacted raw materials may be greatly reduced, and a degree of polymerization of the resin may be improved. Therefore, the polyester to be prepared may have the above-described characteristics, such as high viscosity, excellent impact strength and specific melt viscosity, as well as high heat resistance.

Meanwhile, the esterification reaction may be carried out in the presence of the esterification catalyst including the zinc-based compound. The catalyst may be used in an amount of 1 to 100 ppm, based on the content of the central metal atom in the total amount of the polyester resin to be synthesized. Specific examples of such zinc-based catalysts include zinc acetate, zinc acetate dihydrate, zinc chloride, zinc sulfate, zinc sulfide, zinc carbonate, zinc citrate, zinc gluconate, or mixtures thereof. If the content of the zinc-based catalyst is too small, it may be difficult to markedly improve the efficiency of the esterification reaction, and an amount of the reactants that do not participate in the reaction may be considerably increased. If the content of the zinc-based catalyst is too large, the appearance properties of the polyester resin to be prepared may be deteriorated.

The step of subjecting the esterification reaction product to polycondensation may include allowing the esterification reaction product of the dicarboxylic acid components and the diol components to react at a temperature of 150°C to 300°C and a reduced pressure of 600 mmHg to 0.01 mmHg for 1 to 24 hours.

The polycondensation reaction may be carried out at a temperature of 150°C to 300°C, preferably 200°C to 290°C, and more preferably 260°C to 280°C; and a reduced pressure of 600 mmHg to 0.01 mmHg, preferably 200 mmHg to 0.05 mmHg, and more preferably 100 mmHg to 0.1 mmHg. The reduced pressure condition of the polycondensation reaction enables the removal of glycol, which is a by-product of the polycondensation reaction, from the system. If the polycondensation reaction is carried out outside the reduced pressure range of 600 mmHg to 0.01 mmHg, removal of the by-product may be insufficient.

If the polycondensation reaction is carried out outside the temperature range of 150°C to 300°C, or at a temperature of 150°C or lower, glycol which is a by-product of the polycondensation reaction may not be effectively removed from the system, and as a result, the intrinsic viscosity of the final reaction product may be lowered, which deteriorates the physical properties of the polyester resin. If the reaction is carried out at a temperature of 300°C or higher, there is a high possibility that the polyester resin may be yellowed in appearance. The polycondensation reaction may be carried out for a time necessary for the intrinsic viscosity of the final reaction product to reach an appropriate level, for example, for an average retention time of 1 hour to 24 hours.

Meanwhile, the step of preparing the polyester resin may further include adding a polycondensation catalyst. The polycondensation catalyst may be added to the esterification or transesterification reaction product before initiation of the polycondensation reaction. Alternatively, the polycondensation catalyst may be added to a slurry including the diol components and the dicarboxylic acid components before or during the esterification reaction.

As the polycondensation catalyst, a titanium-based compound, a germanium-based compound, an antimony-based compound, an aluminum-based compound, a tin-based compound, or a mixture thereof may be used. Examples of the titanium-based compound and germanium-based compound are the same as those described above.

Hereinafter, the action and effect of the present invention will be explained in more detail with reference to specific Examples of the present specification However, these examples are provided for illustrative purposes and are not intended to limit the scope of the present invention.

### Examples and Comparative Examples

### Example 1

First, wood flour having a particle size of 50 mesh to 200 mesh was dried at 80°C to 120°C for 4 hours such that its water content was less than 1%.

38 parts by weight of a resin mixture (A), which was obtained by mixing 75 wt% of a terephthalic acid-1,4-cyclohexanedimethanol-ethylene glycol copolymer polyester resin (Tg: 80°C) and 25 wt% of polypropylene resin (PP), was mixed with 60 parts by weight of dried wood flour (B) (a mixture of pine tree and rubber tree, a particle size of 60 to 140 mesh), and then 0.2 parts by weight of 2-(2-hydroxy-5-methylphenyl)benzotriazole as a UV absorber, 0.3 parts by weight of a phosphorus-based antioxidant, and 1 part by weight of polyolefin wax as a lubricant were added to further improve performances, 7 parts by weight of ground calcium carbonate was added to improve strength, and 3.5 parts by weight of polyolefin was added to improve surface, followed by extrusion.

In Example 1, the terephthalic acid-1,4-cyclohexanedimethanol-ethylene glycol copolymer polyester resin was PETG KN-100 (Tg:80°C) available from SK Chemicals, Co. Ltd., Korea, and the polypropylene resin was Y120 PP available from Lotte Chemical Corp., Korea.

The mixture was blended for about 20 minutes, and injected into a twin-screw extruder to prepare pellets. Extrusion was carried out at a temperature range from 150°C to 250°C, and a profile product was prepared by profile extrusion.

### Examples 2 to 6 and Comparative Examples 1 and 2

Profile products (synthetic wood) were prepared in the same manner as in Example 1, except that compounds and contents listed in the following Table 1 were used, respectively.

**[Table 1]**

| Section | | Thermoplastic resin (A) (kind (weight ratio)*/content (parts by weight)*) | Wood flour (B) (kind/content (parts by weight)) | Additive (C) (kind/content (parts by weight)) |
|---|---|---|---|---|
| Example 1 | | PP:PETG=25:75/38 | B-1/60 | C-1/12 |
| Example 2 | | PETG/38 | B-1/60 | C-1/12 |
| Example 3 | | PP:ECOZEN T90=25:75/38 | B-1/60 | C-1/12 |
| Example 4 | | ECOZEN T90/38 | B-1/60 | C-1/12 |
| Example 5 | | PP: ECOZEN T110=25:75/38 | B-1/60 | C-1/12 |
| Example 6 | | ECOZEN T110/38 | B-1/60 | C-1/12 |
| Comparative Example 1 | | PVC/38 | B-1/60 | C-1/12 |
| Comparative Example 2 | | PP/38 | B-1/60 | C-1/12 |
| | Components of A, B and C were calculated, based on total 100 parts by weight of the thermoplastic resin, and the content of A means the content of each resin, based on total 100wt% of the resin mixture. | | | |
| | A (Thermoplastic resin): | | | |
| | * Kind (weight ratio) of A resin represents a weight ratio of each component of the resin mixture. | | | |
| | * Content (parts by weight) of A resin represents the content of A resin included in the synthetic wood, expressed as parts by weight. | | | |
| | PP: Y120 PP of Lotte Chemical Corp. used in Example 1. | | | |
| | PETG: PETG KN-100 (Tg: 80°C) (including CHDM as a diol component) of SK Chemicals, Co. Ltd. used in Example 1. | | | |
| | ECOZEN T90: ECOZEN T90 (Tg: 90°C) (including CHDM and ISB as diol components) of SK Chemicals, Co. Ltd. | | | |
| | ECOZEN T110: ECOZEN T110 (Tg: 110°C) (including CHDM and ISB as diol components) of SK Chemicals, Co. Ltd. | | | |
| | PVC: PVC of LG Chemical, Ltd. (LS100E, K-Value = 67, polymerization degree = 1040±50) | | | |
| | C-1: additive used in Example 1 (including a UV absorber, a phosphorous-based antioxidant, and a lubricant) | | | |

### Experimental method

### 1, Coefficient of linear thermal expansion (Coefficient of Thermal Expansion)

Coefficient of linear thermal expansion was measured by using a specimen having a length of 50 mm according to KS M 3060 in a temperature range of -30°C to 60°C and calculated by the following Equation. The results are shown in Table 2.

### Coefficient of linear thermal expansion (a) = (L2- L1)/[L0(T2-T1)]

wherein L2, L1: a length of each specimen at a temperature of T2 or T1, respectively, L0: a length of each specimen which was measured after the specimen was left at a temperature of 23°C ± 2 and a relative humidity of (66 ± 5)% for 3 days or more, before testing.

### 2. Impact strength

A charpy impact strength test was carried out by using type no. 1 specimen according to KS M ISO 179-1, and a standard test was carried at a temperature of 23°C ± 2 to measure impact strength. The results are shown in Table 2.

### 3. Flexural load

A length of the specimen was 600 mm and a width of the specimen did not exceed 150 ± 10 mm. For a maximum flexural load test, a radius of a pressing rod and a support and a test speed were determined according to KS M ISO 178, and the maximum flexural load was measured by mounting the test specimens. The test surface was used as an exposed surface during construction, and an average value of three test specimens were measured. The results are shown in Table 2.

### 4. Weather resistance test

Weather resistance was measured by xenon arc lamp testing, and discoloration was measured according to KS B 5549 by using a weather-o-meter and a xenon lamp under conditions of a temperature of 63°C, illuminance of 0.35 W/m², and a relative humidity of 50% for 2,000 hours. A color change (ΔE) before and after the test was measured. The results are shown in Table 2 according to the following evaluation criteria.

### <Evaluation criteria>

⊚ : ΔE<3
∘ : 3≤ΔE<5
△ : 5≤ΔE<8
X : 8≤ΔE

**[Table 2]**

| Section | Flexural load (N) | Coefficient of linear thermal expansion (1/°C)(x10⁻⁵) | Impact strength (kJ/m²) | Weather resistance (200 hrs) |
|---|---|---|---|---|
| Example 1 | 4800 | 5.7 | 3.4 | ○ |
| Example 2 | 7200 | 4.0 | 3.4 | ○ |
| Example 3 | 5800 | 5.6 | 4.0 | ○ |
| Example 4 | 9700 | 3.0 | 5.0 | ⊚ |
| Example 5 | 5000 | 5.5 | 3.8 | ○ |
| Example 6 | 8600 | 3.0 | 4.5 | ⊚ |
| Comparative Example 1 | 3600 | 6.0 | 3.0 | △ |
| Comparative Example 2 | 3400 | 5.8 | 3.0 | △ |

As confirmed in Table 2, it was found that Examples using the polyester resin showed excellent interfacial adhesion with wood flour to have remarkably excellent flexural load, impact strength, coefficient of linear thermal expansion, and weather resistance.

Particularly, it was confirmed that Example 4 using ECOZEN resin alone including a combination of cyclohexanediol and isosorbide as diol components exhibited the most excellent flexural load and impact strength.

In contrast, it was confirmed that Comparative Example 1 using only PVC resin had low impact strength due to features of the crystalline resin, and low compatibility with wood flour to show remarkably low flexural load and weather resistance.

Further, it was confirmed that Comparative Example 2 using only PP had remarkably low flexural load and impact strength, as compared to Examples.

## Claims

1. A synthetic wood comprising a polyester resin (A) and wood flour (B),
wherein the polyester resin (A) includes moieties of dicarboxylic acid components including terephthalic acid; and moieties of diol components including 10 to 80 mole% of cyclohexanedimethanol, 5 to 60 mole% of isosorbide, and a residual amount of other diol compounds,
wherein the wood flour (B) has an average particle size of 50 mesh to 200 mesh,
wherein the polyester resin (A) is included in an amount of 30 parts by weight to 80 parts by weight with respect to 100 parts by weight of the wood flour (B).

2. The synthetic wood of claim 1, wherein the polyester resin (A) has a glass transition temperature (Tg) of 85°C to 130°C.

3. The synthetic wood of claim 1, wherein the polyester resin (A) has an intrinsic viscosity of 0.5 dl/g to 1.0 dl/g.

4. The synthetic wood of claim 1, wherein the polyester resin (A) is includes moieties of dicarboxylic acid components including terephthalic acid; and moieties of diol components including 10 to 80 mole% of cyclohexanedimethanol, 5 to 12 mole% of isosorbide, and a residual amount of other diol compounds.

5. The synthetic wood of claim 1, wherein the polyester resin (A) is included in an amount of 50 parts by weight to 70 parts by weight with respect to 100 parts by weight of the wood flour (B).

6. The synthetic wood of claim 1, wherein the wood flour (B) has a water content of 0.01% to 3%.

7. The synthetic wood of claim 1, wherein the synthetic wood has a flexural load of 4,000 N to 10,000 N, as measured according to KS M ISO 178.

8. The synthetic wood of claim 1, wherein the synthetic wood has impact strength of 3.3 kJ/m2 to 10.0 kJ/m2, as measured according to KS M ISO 179-1.

9. A method of preparing a synthetic wood, the method comprising the steps of:
mixing a polyester resin (A) and wood flour (B), and extruding a mixture at a temperature of 150°C to 250°C,
wherein the polyester resin (A) includes moieties of dicarboxylic acid components including terephthalic acid; and moieties of diol components including 10 to 80 mole% of cyclohexanedimethanol, 5 to 60 mole% of isosorbide, and a residual amount of other diol compounds,
wherein the wood flour (B) has an average particle size of 50 mesh to 200 mesh,
wherein the polyester resin (A) is included in an amount of 30 parts by weight to 80 parts by weight with respect to 100 parts by weight of the wood flour (B).

10. The method of preparing the synthetic wood of claim 9 wherein the polyester resin (A) is prepared by the steps of esterifying the diol components including 5 to 60 mole% of isosorbide, 10 to 80 mole% of cyclohexanedimethanol, and a residual amount of other diol compounds with the dicarboxylic acid components including terephthalic acid in the presence of an esterification catalyst including a zinc-based compound;
adding a phosphorus-based stabilizer thereto at the time when a degree of esterification reaches 80% or more; and
subjecting an esterification reaction product to polycondensation.

11. The method of preparing the synthetic wood of claim 10, wherein the polyester resin (A) has an intrinsic viscosity of 0.5 dl/g to 1.0 dl/g.

12. The method of preparing the synthetic wood of claim 10, wherein an amount of the diol components or the dicarboxylic acid components which remain unreacted without participating in the esterification reaction is less than 20%.

13. The method of preparing the synthetic wood of claim 10, wherein the esterification reaction is carried out at a pressure of 0 kg/cm2 to 10.0 kg/cm2 and at a temperature of 150°C to 300°C.

14. The method of preparing the synthetic wood of claim 13, wherein in the esterification reaction, a molar ratio of the dicarboxylic acid components: the diol components is 1:1.05 to 1: 3.0.

15. The method of preparing the synthetic wood of claim 13, wherein the esterification reactions are carried out at a pressure of 0 kg/cm2 to 10.0 kg/cm2 and at a temperature of 150°C to 300°C, respectively.

16. The method of preparing the synthetic wood of claim 10, wherein the esterification reaction is carried out for 200 minutes to 330 minutes.

17. The method of preparing the synthetic wood of claim 10, wherein the polycondensation reaction is carried out at a temperature of 150°C to 300°C and a reduced pressure of 600 mmHg to 0.01 mmHg for 1 hour to 24 hours.

18. The method of preparing the synthetic wood of claim 10, further comprising the step of adding one or more catalyst compounds selected from the group consisting of titanium-based compounds, germanium-based compounds, antimony-based compounds, aluminum-based compounds, and tin-based compounds to the polycondensation reaction.

## Patentansprüche

1. Ein synthetisches Holz, das ein Polyesterharz (A) und Holzmehl (B) umfasst,
wobei das Polyesterharz (A) Anteile von Dicarbonsäurekomponenten einschließt, die Terephthalsäure einschließen, und Anteile von Diolkomponenten, die 10 bis 80 Molprozent Cyclohexandimethanol, 5 bis 60 Molprozent Isosorbid und eine Restmenge weiterer Diolverbindungen einschließen,
wobei das Holzmehl (B) eine mittlere Partikelgröße von 50 mesh bis 200 mesh hat,
wobei das Polyesterharz (A) in einer Menge von 30 Gewichtsteilen bis 80 Gewichtsteilen, bezogen auf 100 Gewichtsteile des Holzmehls (B), eingeschlossen ist.

2. Das synthetische Holz gemäß Anspruch 1, wobei das Polyesterharz (A) eine Glasübergangstemperatur (Tg) von 85°C bis 130°C hat.

3. Das synthetische Holz gemäß Anspruch 1, wobei das Polyesterharz (A) eine Grenzviskosität von 0,5 dl/g bis 1,0d1/g hat.

4. Das synthetische Holz gemäß Anspruch 1, wobei das Polyesterharz (A) Anteile von Dicarbonsäurekomponenten einschließt, die Terephthalsäure einschließen, und Anteile von Diolkomponenten, die 10 bis 80 Molprozent Cyclohexandimethanol, 5 bis 12 Molprozent Isosorbid und eine Restmenge weiterer Diolverbindungen einschließen.

5. Das synthetische Holz gemäß Anspruch 1, wobei das Polyesterharz (A) in einer Menge von 50 Gewichtsteilen bis 70 Gewichtsteilen, bezogen auf 100 Gewichtsteile des Holzmehls (B), eingeschlossen ist.

6. Das synthetische Holz gemäß Anspruch 1, wobei das Holzmehl (B) einen Wassergehalt von 0,01% bis 3% hat.

7. Das synthetische Holz gemäß Anspruch 1, wobei das synthetische Holz eine Biegefestigkeit von 4.000 N bis 10.000 N, gemessen nach KS M ISO 178, hat.

8. Das synthetische Holz gemäß Anspruch 1, das eine Stoßfestigkeit von 3,3 kJ/m² bis 10,0 kJ/m², gemessen nach KS M ISO 179-1, hat.

9. Ein Verfahren zur Herstellung eines synthetischen Holzes, wobei das Verfahren folgende Schritte umfasst:
das Mischen eines Polyesterharzes (A) und Holzmehls (B) und das Extrudieren einer Mischung bei einer Temperatur von 150°C bis 250°C,
wobei das Polyesterharz (A) Anteile von Dicarbonsäurekomponenten einschließt, die Terephthalsäure einschließen, und Anteile von Diolkomponenten, die 10 bis 80 Molprozent Cyclohexandimethanol, 5 bis 60 Molprozent Isosorbid und eine Restmenge weiterer Diolverbindungen einschließen,
wobei das Holzmehl (B) eine durchschnittliche Partikelgrö0e von 50 mesh bis 200 mesh hat,
wobei das Polyesterharz (A) in einer Menge von 30 Gewichtsteilen bis 80 Gewichtsteilen, bezogen auf 100 Gewichtsteile des Holzmehls (B), eingeschlossen ist.

10. Das Verfahren zur Herstellung des synthetischen Holzes gemäß Anspruch 9, wobei das Polyesterharz (A) hergestellt wird durch die Schritte der Veresterung der Diolkomponenten, die 5 bis 60 Molprozent Isosorbid, 10 bis 80 Molprozent Cyclohexandimethanol und eine Restmenge weiterer Diolverbindungen einschließen, mit den Dicarbonsäurekomponenten, die Terephthalsäure einschließen, in der Anwesenheit eines Veresterungskatalysators, der eine Verbindung auf Zinkbasis einschließt;
des Hinzufügens eines Stabilisators auf Phosphorbasis dazu zu dem Zeitpunkt, zu dem ein Veresterungsgrad 80% oder mehr erreicht; und
des Aussetzens eines Veresterungs-Reaktionsprodukts gegenüber Polykondensation.

11. Das Verfahren zur Herstellung des synthetischen Holzes gemäß Anspruch 10, wobei das Polyesterharz (A) eine Grenzviskosität von 0,5 dl/g bis 1,0 dl/g hat.

12. Das Verfahren zur Herstellung des synthetischen Holzes gemäß Anspruch 10, wobei eine Menge der Diolkomponenten oder der Dicarbonsäurekomponenten, die unverbraucht bleiben, ohne an der Veresterungsreaktion teilzunehmen, weniger als 20% beträgt.

13. Das Verfahren zur Herstellung des synthetischen Holzes gemäß Anspruch 10, wobei die Veresterungsreaktion bei einem Druck von 0 kg/cm² bis 10,0 kg/cm² und einer Temperatur von 150°C bis 300°C durchgeführt wird.

14. Das Verfahren zur Herstellung des synthetischen Holzes gemäß Anspruch 13, wobei in der Veresterungsreaktion ein Molverhältnis der Dicarbonsäurekomponenten: den Diolkomponenten 1:1,05 bis 1:3,0 beträgt.

15. Das Verfahren zur Herstellung des synthetischen Holzes gemäß Anspruch 13, wobei die Veresterungsreaktionen jeweils bei einem Druck von 0 kg/cm² bis 10,0 kg/cm² und einer Temperatur von 150°C bis 300°C durchgeführt werden.

16. Das Verfahren zur Herstellung des synthetischen Holzes gemäß Anspruch 10, wobei die Veresterungsreaktion über 200 Minuten bis 330 Minuten durchgeführt wird.

17. Das Verfahren zur Herstellung des synthetischen Holzes gemäß Anspruch 10, wobei die Polykondensationsreaktion bei einer Temperatur von 150°C bis 300°C und einem verminderten Druck von 600 mmHg bis 0,01 mmHg über 1 Stunde bis 24 Stunden durchgeführt wird.

18. Das Verfahren zur Herstellung des synthetischen Holzes gemäß Anspruch 10, das weiter den Schritt des Hinzufügens einer oder mehrerer Katalysatorverbindungen, gewählt aus der Gruppe bestehend aus Verbindungen auf Titanbasis, Verbindungen auf Germaniumbasis, Verbindungen auf Antimonbasis, Verbindungen auf Aluminiumbasis und Verbindungen auf Zinnbasis, zu der Polykondensationsreaktion umfasst.

## Revendications

1. Bois synthétique comprenant une résine polyester (A) et une farine de bois (B),
dans lequel la résine polyester (A) comporte des motifs de composants de type acide dicarboxylique, comprenant de l'acide téréphtalique, et des motifs de composants de type diol, comprenant de 10 à 80 % en moles de cyclohexanediméthanol, de 5 à 60 % en moles d'isosorbide et un reste d'autres composés de type diol,
dans lequel la farine de bois (B) présente une taille moyenne de particules de 50 mesh à 200 mesh,
et dans lequel la résine polyester (A) est incluse en une proportion de 30 parties en poids à 80 parties en poids pour 100 parties en poids de farine de bois (B).

2. Bois synthétique conforme à la revendication 1, dans lequel la résine polyester (A) présente une température de transition vitreuse (Tv) de 85 °C à 130 °C.

3. Bois synthétique conforme à la revendication 1, dans lequel la résine polyester (A) présente une viscosité intrinsèque de 0,5 dL/g à 1,0 dL/g.

4. Bois synthétique conforme à la revendication 1, dans lequel la résine polyester (A) comporte des motifs de composants de type acide dicarboxylique, comprenant de l'acide téréphtalique, et des motifs de composants de type diol, comprenant de 10 à 80 % en moles de cyclohexanediméthanol, de 5 à 12 % en moles d'isosorbide et un reste d'autres composés de type diol

5. Bois synthétique conforme à la revendication 1, dans lequel la résine polyester (A) est incluse en une proportion de 50 parties en poids à 70 parties en poids pour 100 parties en poids de farine de bois (B).

6. Bois synthétique conforme à la revendication 1, dans lequel la farine de bois (B) présente une teneur en eau de 0,01 % à 3 %.

7. Bois synthétique conforme à la revendication 1, lequel bois synthétique présente une charge en flexion, mesurée selon la norme KS M ISO 178, de 4 000 N à 10 000 N.

8. Bois synthétique conforme à la revendication 1, lequel bois synthétique présente une résistance au choc, mesurée selon la norme KS M ISO 179-1, de 3,3 kJ/m² à 10,0 kJ/m².

9. Procédé de préparation d'un bois synthétique, lequel procédé comporte les étapes suivantes :
mélanger une résine polyester (A) et une farine de bois (B), et extruder le mélange à une température de 150 °C à 250 °C,
et dans lequel procédé la résine polyester (A) comporte des motifs de composants de type acide dicarboxylique, comprenant de l'acide téréphtalique, et des motifs de composants de type diol, comprenant de 10 à 80 % en moles de cyclohexanediméthanol, de 5 à 60 % en moles d'isosorbide et un reste d'autres composés de type diol,
dans lequel procédé la farine de bois (B) présente une taille moyenne de particules de 50 mesh à 200 mesh,
et dans lequel procédé la résine polyester (A) est utilisée en une proportion de 30 parties en poids à 80 parties en poids pour 100 parties en poids de farine de bois (B).

10. Procédé de préparation d'un bois synthétique, conforme à la revendication 9, pour lequel on prépare la résine polyester (A) en passant par les étapes suivantes :
estérifier des composants de type diol, comprenant de 5 à 60 % en moles d'isosorbide, de 10 à 80 % en moles de cyclohexanediméthanol et un reste d'autres composés de type diol, avec des composants de type acide dicarboxylique, comprenant de l'acide téréphtalique, en présence d'un catalyseur d'estérification comprenant un composé à base de zinc,
y ajouter un stabilisant à base de phosphore, quand le degré d'estérification atteint une valeur de 80 % ou plus,
et soumettre le produit de cette réaction d'estérification à une polycondensation.

11. Procédé de préparation d'un bois synthétique, conforme à la revendication 10, dans lequel la résine polyester (A) présente une viscosité intrinsèque de 0,5 dL/g à 1,0 dL/g.

12. Procédé de préparation d'un bois synthétique, conforme à la revendication 10, dans lequel la proportion des composants de type diol ou des composants de type acide dicarboxylique qui restent intacts, sans avoir réagi et participé à la réaction d'estérification, est inférieure à 20 %.

13. Procédé de préparation d'un bois synthétique, conforme à la revendication 10, dans lequel la réaction d'estérification est effectuée sous une pression de 0 kg/cm² à 10,0 kg/cm² et à une température de 150 °C à 300 °C.

14. Procédé de préparation d'un bois synthétique, conforme à la revendication 13, dans lequel, dans la réaction d'estérification, le rapport molaire des composants de type acide dicarboxylique aux composants de type diol vaut de 1/1,05 à 1/3,0.

15. Procédé de préparation d'un bois synthétique, conforme à la revendication 13, dans lequel les réactions d'estérification sont effectuées sous une pression de 0 kg/cm² à 10,0 kg/cm² et à une température de 150 °C à 300 °C, respectivement.

16. Procédé de préparation d'un bois synthétique, conforme à la revendication 10, dans lequel la réaction d'estérification est effectuée durant 200 minutes à 330 minutes.

17. Procédé de préparation d'un bois synthétique, conforme à la revendication 10, dans lequel la réaction de polycondensation est effectuée à une température de 150 °C à 300 °C et sous une pression réduite, de 600 mmHg à 0,01 mmHg, durant 1 heure à 24 heures.

18. Procédé de préparation d'un bois synthétique, conforme à la revendication 10, qui comporte en outre une étape consistant à ajouter, pour la réaction de polycondensation, un ou plusieurs composé(s) catalyseur(s) choisi(s) dans l'ensemble constitué par les composés à base de titane, les composés à base de germanium, les composés à base d'antimoine, les composés à base d'aluminium, et les composés à base d'étain.
